# EUROPÄISCHE PATENTSCHRIFT

(11) **EP 1 462 760 B1**
(45) Veröffentlichungstag und Bekanntmachung des Hinweises auf die Patenterteilung: **24.12.2008**
(21) Anmeldenummer: 04004880.3
(22) Anmeldetag: 02.03.2004
(51) Int. Cl.: G01B 7/008, G01B 11/00, G01B 21/04, G01B 5/008

(54) **Vorrichtung zur Erfassung der Lage eines Tastelements in einem Mehrkoordinatenmessgerät**
Apparatus for measuring the position of a probe in a coordinate measuring machine
Dispositif de mesure de la position d'un capteur dans une machine de mesure de coordonnées

(30) Priorität: 24.03.2003 DE 10313038
(43) Veröffentlichungstag der Anmeldung: 29.09.2004
(73) Patentinhaber: Klingelnberg GmbH, 42499 Hückeswagen (DE)
(72) Erfinder: Mies, Georg, 51688 Wipperfürth (DE)
(74) Vertreter: Menges, Rolf

(56) Entgegenhaltungen:
- EP-A- 0 464 431
- CH-A- 674 897
- US-A- 4 587 622
- US-A- 4 833 630

## Beschreibung

Die Erfindung betrifft eine Vorrichtung der im Oberbegriff des Patentanspruchs 1 angegebenen Art.

Eine solche Vorrichtung ist aus der CH-A-674 897 bekannt, auf die weiter unten eingegangen wird.

Aus der DE 43 45 094 C2 ist eine Formmessmaschine bekannt, die ein eigenes, von den Führungsmitteln und den Stelleinrichtungen der Maschine entkoppeltes Bezugssystem zur Bahnkorrektur an den Führungen aufweist, das maßgenaue längliche Normale enthält, die parallel zu den einzelnen Koordinatenachsen von Verschiebeschlitten angeordnet sind und die von auf den Führungsmitteln verfahrbaren Teilen laufend abtastbar sind. Das Bezugssystem ist so beschaffen, dass seine Geometrie langzeitstabil und wenig temperaturabhängig ist. Der Aufwand, der erforderlich ist, um die erforderliche Messgenauigkeit zu erzielen, ist bei dieser bekannten Formmessmaschine jedoch beträchtlich, und zwar sowohl was den apparativen Aufwand anbetrifft als auch was den messtechnischen Aufwand anbetrifft. Das Bezugssystem besteht nämlich aus drei Normalen, die jeweils von im Querschnitt rechteckigen Profilschienen gebildet sind, welche auf zwei einander benachbarten Seitenflächen Abtastbahnen tragen. Das erste Normal ist auf dem Maschinenbett gelagert. Das zweite Normal ist an der Stirnseite einer vertikalen Säule befestigt und darüber hinaus an einem Ende mit Winkelteilen versehen, welche die Abtastbahnen des ersten Normals übergreifen, so dass das zweite Normal mit dem ersten Normal gekoppelt ist. Entsprechend ist das dritte Normal mit dem zweiten Normal gekoppelt. An den beiden Kopplungsstellen zwischen den drei Normalen sind jeweils mehrere Sensoren vorgesehen, die jede Relativbewegung zwischen zwei Normalen an deren Kopplungsstelle nach Lage und Richtung erfassen. Sie werden einem Rechner zugeleitet, der daraus entsprechende Korrekturwerte für das Messergebnis oder für die räumliche Lage des Tastelements berechnet. Durch diesen Aufbau soll erreicht werden, dass die bekannte Formmessmaschine ein besseres dynamisches Verhalten und kürzere Neben- und Messzeiten erlaubt als eine Formmessmaschine mit einem extrem steifen Maschinenbett, das häufig aus Granit hergestellt ist und auf dem über einen Verschiebeschlitten die vertikale Säule abgestützt ist, welche ihrerseits wiederum entweder massiv oder in schwerer Guss- oder Stahlschweißkonstruktion aufgebaut ist.

Aus der DE 31 50 977 A1 sind Verfahren und eine Einrichtung bekannt zur Ermittlung und Korrektur von Führungsfehlern von geführten Maschinenteilen. Dabei werden die relevanten Führungsfehler einer Messmaschine ermittelt und durch Korrekturfunktionen angenähert, die im Rechner der Maschine gespeichert werden. Bei den nachfolgenden Messungen werden die fehlerhaften Ergebnisse der Koordinatenmesseinrichtung mit Hilfe der Korrekturfunktionen berichtigt. Ein prismatisches Bezugsnormal, das sich parallel zu der Führung eines Schlittens erstreckt, trägt auf einer ersten und auf einer zweiten Fläche Linienraster, von denen eines zweidimensional ist. Ein Positionsmesssystem dient zur Bestimmung der räumlichen Lage eines mit dem Schlitten fest verbundenen Tragkörpers, an dem Leseköpfe angebracht sind und der an dem Bezugsnormal geführt ist. Die Leseköpfe oder der Tragkörper werden dazu direkt auf Flächen des Bezugsnormals aufgesetzt. Der Tragkörper ist also notwendigerweise mit dem Bezugsnormal in Berührung, das somit eine mechanische Führung bildet, was grundsätzlich nachteilig ist.

Aus der WO 99/17073 ist eine Vorrichtung bekannt zur Erfassung von sechs Komponenten der Relativbewegung zweier Körper bei einer primär zweidimensional translatorischen Grundbewegung. Die Körper sind eine mit einer zweidimensionalen, optischen Gitterteilung versehene Platte und ein Element, das eine zu der Platte parallele, ebene Fläche und als Lesekopf mehrere optische Gitter aufweist. Das Element wird der Platte derart angenähert, dass die optischen Gitter über eine Auswertung der Intensitätsschwankungen des reflektierten Lichts eine Erfassung von zu der Platte parallelen Relatiwerschiebungen in X- und Y-Richtung erlauben. Zur Abstandserfassung zwischen dem Element und der Platte sind mindestens drei Abstandserfassungseinrichtungen vorgesehen, die kapazitiv, induktiv oder als Taster ausgebildet sind. Die Vorrichtung erfordert ein an dem einen Körper angeordnetes ebenes flächiges Normal mit einer zweidimensionalen Gitterteilung sowie eine am anderen Körper vorgesehene ebene Fläche, die parallel zu dem ebenen flächigen Normal ausrichtbar ist.

Die GB 2 034 880 A offenbart eine Vorrichtung, die speziell zur Durchführung von linearen Messungen in zwei Dimensionen ausgebildet ist. Zusätzlich ist dafür ein Wagen auf Führungsschienen in zwei Dimensionen über eine Basis beweglich. Auf dem Wagen befindet sich eine Fläche, auf welche ein zu messender Gegenstand aufgebracht werden kann. Die Unterseite der Fläche trägt ein erstes optisches Gitter aus zueinander rechtwinkelig angeordneten parallelen Linien. Eine Sonde ist oberhalb der Fläche angeordnet. Auf der Basis unterhalb des Wagens sind zwei Leseköpfe angeordnet, um Bewegungen des Wagens in zwei senkrechten Richtungen zu erfassen.

Bei der Vorrichtung nach der eingangs erwähnten CH-A-674 897 ruht ein Auflagefuß einer beweglichen Säule direkt auf einem Tisch. Parallel zu dem ebenen Tisch und unabhängig von demselben und von der auf dem Tisch verschiebbaren Säule ist eine ebene Erfassungsvorrichtung an einer Konsole befestigt, welche von einem starren Träger vorsteht. Die ebene Erfassungsvorrichtung trägt ein X-Y-Koordinatengitter. Die Position des Auflagefußes in Bezug auf das Koordinatengitter wird mit Hilfe von zwei Fühlpunkten bestimmt. Die bewegliche Säule trägt einen Tastfühler mit einer Messkugel, deren Mittelpunkt einen Projektionspunkt in der X-Y-Ebene hat, welcher vorzugsweise auf einer Verlängerung einer durch die Fühlpunkte gehenden Geraden liegt. Die Säule ist auf dem Tisch beliebig verfahrbar. Es ist aber stattdessen auch vorgesehen, die ebene Erfassungsvorrichtung gegenüber der Säule zu verfahren. Wenn bei der bekannten Vorrichtung die Säule durch eine von außen einwirkende Belastung so beeinflusst wird, dass die Parallelität zwischen dem Auflagefuß und dem Tisch nicht mehr vorhanden ist, oder wenn die Parallelität zwischen der ebenen Erfassungsvorrichtung und dem die Säule tragenden Tisch verloren gehen sollte, könnte ein dadurch verursachter Kippfehler bei der bekannten Vorrichtung nicht berücksichtigt werden.

Die US-A-4,833,630 beschreibt eine Vorrichtung, von der die vorgenannte CH-A-674 897 ausgeht. Der Unterschied zwischen den Vorrichtung nach diesen beiden Dokumenten liegt darin, dass bei der Vorrichtung nach der US-A-4,833,630 der Auflagefuß der beweglichen Säule direkt auf einem Messtisch ruht, der das X-Y-Koordinatengitter trägt. Bei dieser bekannten Vorrichtung braucht der Auflagefuß nicht direkt auf dem Tisch zu ruhen. Vielmehr kann der Fuß darauf durch ein Luftkissensystem abgestützt werden, das in den Fuß der Säule integriert ist, um das Verschieben des Auflagefußes auf der Ebene des Tisches zu erleichtern. Wenn bei dieser bekannten Vorrichtung der Auflagefuß durch das Luftkissensystem und/oder durch eine von außen einwirkende Belastung so beeinflusst wird, dass die Parallelität zwischen dem Auflagefuß und dem Tisch nicht mehr vorhanden ist, tritt auch hier ein Kippfehler auf, der bei der bekannten Vorrichtung nicht berücksichtigt werden kann.

Aus der EP-A-0 464 431 ist ein Koordinatenmessgerät in Ständerbauweise bekannt, bei dem, wie in der Koordinatenmesstechnik üblich, von einem Konzept ausgegangen wird, bei dem die Führungen für die beiden Koordinatenrichtungen aufeinander aufbauen. Das Dokument befasst sich hauptsächlich mit dem Antrieb von Schlitten in X- und Y-Richtung, mit dem Ziel, bei einem Koordinatenmessgerät mit einem in den beiden Koordinatenrichtungen waagerecht verschiebbaren Ständer Antriebe und Führungen so anzuordnen, dass Belastungen der Führungen aufgrund außeraxialer Momente beim Antrieb in den beiden Koordinatenrichtungen weitgehend vermieden werden. Mit der Positionserfassung an sich, weder in der X-Y-Ebene noch in der nur nebenbei erwähnten dritten oder Z-Koordinatenachse, befasst sich dieses Dokument nicht.

Aufgabe der Erfindung ist es, bei einer Vorrichtung der eingangs genannten Art die Messgenauigkeit zu erhöhen.

Diese Aufgabe ist erfindungsgemäß durch eine Vorrichtung mit dem im kennzeichnenden Teil des Patentanspruchs 1 angegebenen Merkmal gelöst.

Bei der Vorrichtung nach der Erfindung sind die Arbeitsweise und die Anordnung des ersten Positionsmesssystems, das die räumliche Lage des zweiten Normals in Bezug auf das erste Normal bestimmt, so getroffen, dass kleine geometrische Veränderungen des mechanischen Aufbaus des Koordinatenmessgerätes keinen Einfluss auf seine Messgenauigkeit haben. Das Tastelement ist vorzugsweise einem Teil des Mehrkoordinatenmessgerätes zugeordnet, dessen räumliche Lage in Bezug auf das zweite Normal erfasst wird. Die Vorrichtung nach der Erfindung bietet so die Möglichkeit, von dem ersten Normal über das zweite Normal eine durchgehende Messkette bis zu dem Tastelement zu bilden. Irgendwelche mechanischen Kräfte, die das Messergebnis verfälschen könnten, werden dabei nicht auf die Normale übertragen. Unabhängig von der mechanischen Führungsqualität und der Reproduzierbarkeit der linearen Achsen des Mehrkoordinatenmessgeräts lässt sich mit der Vorrichtung nach der Erfindung eine geringe Messunsicherheit erreichen, weil zu jedem Zeitpunkt die genaue Lage des Tastelements im Raum und damit auch relativ zum Messobjekt bekannt ist. Deshalb sind für alle auftretenden Fehler wie Geradheitsfehler, Längenfehler und Kippfehler von drei zueinander senkrecht angeordneten linearen Koordinatenachsen auch keine rechnerischen Bahnkorrekturen erforderlich. Durch die Integration der Vorrichtung in ein Mehrkoordinatenmessgerät werden nicht nur statische sondern auch dynamische Geometriefehler aufgenommen. Als Basis der Vorrichtung nach der Erfindung dient das erste Normal, das als ein ebenes flächiges Normal mit einer Linienrasteranordnung ausgestaltet ist, welche vorzugsweise wenigstens eine hochgenaue Kreuzgitterstruktur eines zweidimensionalen inkrementellen Messsystems aufweist. Die Hauptfläche des ebenen flächigen ersten Normals kann eine Referenzebene zum Beispiel in XY-Koordinatenrichtung bilden. Die Linienrasteranordnung dient dabei als Maßverkörperung in X- und Y-Koordinatenrichtung. Die Senkrechte auf der Hauptfläche des ebenen flächigen Normals definiert dann die Z-Koordinatenrichtung. Somit bildet das ebene flächige Normal die Basis des Koordinatensystems in dem Mehrkoordinatenmessgerät. Das zweidimensionale Verfahren des zweiten Normals relativ zu dem ersten Normal erfolgt vorzugsweise mit einem Kreuzschlitten für die X- und die Y-Koordinatenrichtung. Auf diesem Kreuzschlitten befindet sich die Koordinatenachse für die Z-Richtung.

Vorteilhafte Ausgestaltungen der Vorrichtung nach der Erfindung bilden die Gegenstände der abhängigen Ansprüche.

Wenn in einer Ausgestaltung der Vorrichtung nach der Erfindung die Linienrasteranordnung des ersten Normals das zweidimensionale Linienraster und ein eindimensionales Linienraster aufweist, wird jegliche Redundanz in der Linienrasteranordnung, die zusätzliche Kosten verursachen könnte, vermieden.

Wenn in einer weiteren Ausgestaltung der Vorrichtung nach der Erfindung das erste Positionsmesssystem wenigstens einen ersten Lesekopf und mit Abstand davon einen zweiten Lesekopf zum Erfassen der Linienrasteranordnung des ersten Normals aufweist, wobei die Leseköpfe an dem zweiten Normal gegenüber der Hauptfläche des ersten Normals vorgesehen sind, lassen sich die Position und die Winkellage des zweiten Normals in Relation zu der auf dem ersten Normal aufgebrachten Linienrasteranordnung genau erfassen. Um die Position in der XY-Ebene zu erfassen, würde sogar ein Lesekopf genügen. Durch die Verwendung von zwei Leseköpfen, die in einem definierten, genügend großen Abstand zueinander angebracht sind, lässt sich zusätzlich die Winkellage um die Z-Achse mit erfassen.

Wenn in einer weiteren Ausgestaltung der Vorrichtung nach der Erfindung von den beiden Leseköpfen des ersten Positionsmesssystems entweder beide Leseköpfe dem zweidimensionalen Linienraster des ersten Normals oder ein Lesekopf einem eindimensionalen Linienraster und der andere Lesekopf dem zweidimensionalen Linienrater zugeordnet sind, lässt sich je nach Zeckmäßigkeit das Positionsmesssystem aufwendiger oder weniger aufwendig ausgestalten, da ein einem eindimensionalen Linienraster zugeordneter Lesekopf kostengünstiger als ein einem zweidimensionalen Linienraster zugeordneter Lesekopf ist.

Wenn in einer weiteren Ausgestaltung der Vorrichtung nach der Erfindung das erste Positionsmesssystem drei in den Ecken eines gedachten gleichseitigen Dreiecks angeordnete Abstandssensoren aufweist, die an dem zweiten Normal auf einer dem ersten Normal gegenüberliegenden Seite vorgesehen sind, lassen sich der Abstand und die Winkellage des zweiten Normals in Relation zu der Oberfläche des ersten Normals erfassen. Dazu sind die Abstandssensoren in einem definierten, genügend großen Abstand zueinander angeordnet. Durch diesen Aufbau ist es möglich, die Position und die räumliche Lage des zweiten Normals innerhalb des durch das erste Normal definierten Koordinatensystems zu bestimmen.

Wenn in einer weiteren Ausgestaltung der Vorrichtung nach der Erfindung das zweite Normal an einer Säule vorgesehen ist, an der ein Schlitten längs einer Führung verfahrbar ist, und sich parallel zu der Führung des Schlittens erstreckt, das zweite Normal ein prismatischer Körper mit vorzugsweise polygonalem Querschnitt ist und auf einer ersten und einer zweiten Fläche zweidimensionale Linienraster trägt, und ein zweites Positionsmesssystem zur Bestimmung der räumlichen Lage eines mit dem Schlitten fest verbindbaren oder in den Schlitten integrierten Tragkörpers in Bezug auf das zweite Normal vorgesehen ist, ist das zweite Normal in ein Mehrkoordinatenmessgerät integrierbar, wobei sich durch berührungsloses Erfassen der zweidimensionalen Linienraster des zweiten Normals unabhängig von der mechanischen Führungsqualität des Schlittens und der Reproduzierbarkeit der betreffenden Koordinatenachse eine geringe Messunsicherheit erreichen lässt. Mit dieser Ausgestaltung der erfindungsgemäßen Vorrichtung können so alle Fehler wie Geradheitsfehler, Längenfehler und Kippfehler auch in der vertikalen Koordinatenachse mit hoher Genauigkeit erfasst werden.

Wenn in einer weiteren Ausgestaltung der Vorrichtung nach der Erfindung das zweite Positionsmesssystem aufweist
- einen dritten Lesekopf und einen beabstandeten vierten Lesekopf, die an dem Tragkörper vorgesehen und einem ersten der zweidimensionalen Linienraster des zweiten Normals zugeordnet sind,
- einen an dem Tragkörper angebrachten fünften Lesekopf, der einem zweiten der zweidimensionalen Linienraster des zweiten Normals zugeordnet ist,
- einen vierten Abstandssensor zum Erfassen des Abstands zwischen dem Tragkörper und einer der mit einem zweidimensionalen Linienraster versehenen Flächen des zweiten Normals oder einer dazu parallelen Fläche, und
wenn die Anordnung des Tragkörpers an dem Schlitten so getroffen ist, dass der Tragkörper bei dem Erfassungsvorgang nicht mit dem zweiten Normal in Berührung kommen kann, lässt sich eine besonders geringe Messunsicherheit erreichen, denn geometrische Veränderungen des mechanischen Aufbaus haben keinen Einfluss auf die Messunsicherheit. Die räumliche Lage eines in der vertikalen Koordinatenachse längs einer Führung verfahrbaren Schlittens lässt sich genau erfassen. Das zweite Normal dient dabei nicht als Führung für das zweite Positionsmesssystem, so dass durch Berührung verursachte Kräfte, die das Messergebnis beeinträchtigen könnten, vermieden werden. Vorzugsweise wird das zweite Normal von dem Mehrkoordinatenmessgerät kräftemäßig so entkoppelt, dass es frei von Lager- und Führungskräften gehalten wird. Das durch das zweite Positionsmesssystem ermittelte Messergebnis gibt somit stets die aktuelle Lage des Tragkörpers in Bezug auf das zweite Normal wieder, ungeachtet dessen, ob oder in welchem Ausmaß die Führung des Schlittens fehlerbehaftet ist. Bahnabweichungen des Schlittens gehen so in den Messvorgang direkt ein.

Wenn in einer weiteren Ausgestaltung der Vorrichtung nach der Erfindung die erste und die zweite Fläche zwei einander gegenüberliegende, zueinander parallele Seitenflächen des zweiten Normals sind, kann das zweite Normal ein im Querschnitt rechteckiger, langgestreckter, linealartiger Körper sein. Die Position und die räumliche Lage des Tragkörpers und des mit diesem verbunden Schlittens in Bezug auf das zweite Normal lassen sich so auf besonders einfache Weise erfassen.

Wenn in einer weiteren Ausgestaltung der Vorrichtung nach der Erfindung die erste und die zweite Fläche eine Seitenfläche und eine gegen diese abgewinkelte Stirnfläche des zweiten Normals sind, kann der Tragkörper einen Aufbau haben, der in bestimmten Anwendungsfällen zweckmäßiger sein kann als in einem Fall, wenn wie bei der vorhergehenden Ausgestaltung der Vorrichtung nach der Erfindung die beiden zweidimensionalen Linienraster auf zwei gegenüberliegenden, zueinander parallelen Seitenflächen angeordnet sind.

Wenn in einer weiteren Ausgestaltung der Vorrichtung nach der Erfindung der vierte Abstandssensor an dem Tragkörper in einer definierten Position in Bezug auf dessen Leseköpfe vorgesehen ist, kann er seinen Abstand in einer zu der Koordinatenachse rechtwinkeligen Richtung zu einer der Flächen bestimmen, die die zweidimensionalen Linienraster des zweiten Normals tragen. Durch die Anordnung des dritten, vierten und fünften Lesekopfes und des vierten Abstandssensors in gegenseitig genau definierten Positionen an dem Tragkörper können die Position und die räumliche Lage des Tragkörpers und des mit diesem verbundenen Schlittens reproduzierbar bestimmt werden.

Wenn in weiteren Ausgestaltungen der Vorrichtung nach der Erfindung die Normale und der Tragkörper aus einem temperaturinvarianten Material bestehen, lassen sich Temperaturauswirkungen auf die Messgenauigkeit ausschließen.

Wenn in einer weiteren Ausgestaltung der Vorrichtung nach der Erfindung das zweite Normal zur Anordnung zwischen zwei beabstandeten Längsführungen, die die Führung des Schlittens bilden, ausgestaltet ist, lässt sich das zweite Normal an einer längs der vertikalen Koordinatenachse angeordneten Säule des Mehrkoordinatenmessgerätes so lagern, dass Änderungen der Abmessungen oder der Position der Säule und damit der Führung des Schlittens aufgrund der hier angewandten Art der Messwertaufnahme mit erfasst werden. Bekannte Mehrkoordinatenmessgeräte, die für den Einsatz zumindest dieser Ausgestaltung der Vorrichtung nach der Erfindung geeignet wären, sind die Verzahnungsmesszentren Klingelnberg P 65 / P 100, die in dem so bezeichneten Firmenprospekt Nr. 1353/D/IO aus dem Jahre 2002 dargestellt und beschrieben sind.

Wenn in einer weiteren Ausgestaltung der Vorrichtung nach der Erfindung das zweite Normal eine langgestreckte rechteckige Platte ist, lässt diese sich so dimensionieren, dass sie sich zwischen beabstandeten Längsführungen des Schlittens auf gleicher Höhe mit demselben oder nach vorn versetzt dazu anordnen lässt.

Wenn in einer weiteren Ausgestaltung der Vorrichtung nach der Erfindung der Tragkörper im Querschnitt U-förmig ist und an seinen beiden U-Schenkeln den dritten und vierten bzw. den fünften Lesekopf trägt, eignet er sich insbesondere zur Befestigung an dem Schlitten derart, dass die Leseköpfe die zweidimensionalen Linienraster auf zwei gegenüberliegenden, zueinander parallelen Flächen des zweiten Normals erfassen können.

Wenn in einer weiteren Ausgestaltung der Vorrichtung nach der Erfindung der Tragkörper ein Winkelprofilteil ist und an seinen beiden Schenkeln den dritten und vierten bzw. den fünften Lesekopf trägt, eignet sich das zweite Positionsmesssystem insbesondere zur Erfassung von Linienrastern, die das zweite Normal auf zwei gegeneinander abgewinkelten Flächen trägt.

Wenn in einer weiteren Ausgestaltung der Vorrichtung der nach Erfindung der fünfte Lesekopf an dem Tragkörper so vorgesehen ist, dass er dem dritten oder dem vierten Lesekopf auf gleicher Höhe wie dieser in Bezug auf eine Längserstreckung des zweiten Normals gegenüberliegt, so können die beiden Leseköpfe ihre Position in der Richtung der vertikalen Koordinatenachse und in einer dazu rechtwinkeligen Richtung relativ zu jeweils gegenüberliegend aufgebrachten Kreuzgitterstrukturen des zweiten Normals erfassen. Diese drei Leseköpfe sind gemeinsam in der Lage, eine Verkippen des Tragkörpers um die vertikale Koordinatenachse und um zwei zu der vertikalen Koordinatenachse rechtwinkelige weitere Koordinatenachsen zu erfassen.

Wenn in einer weiteren Ausgestaltung der Vorrichtung nach der Erfindung der Schlitten ein mit dem Tastelement und mit einem dritten Positionsmesssystem versehenes 3D-Tastsystem trägt, lässt sich ein direkter Bezug zwischen der Tastelementposition und dem Schlitten herstellen.

Wenn in einer weiteren Ausgestaltung der Vorrichtung nach der Erfindung das Tastsystem weitere Leseköpfe aufweist, die durch ein auslegerartiges Halteelement direkt mit dem Tragkörper verbunden sind, lässt sich ein direkter Bezug zwischen der Tastelementposition und dem Tragkörper herstellen. Insgesamt ist dadurch jederzeit die Tastelementposition in dem durch das erste Normal definierten Koordinatensystem genau bestimmbar.

Wenn in einer weiteren Ausgestaltung der Vorrichtung nach der Erfindung das Halteelement aus temperaturinvariantem Material besteht, lassen sich auch an dieser Stelle in der Messkette Temperaturauswirkungen auf die Messgenauigkeit ausschließen.

Ausführungsbeispiele der Erfindung werden im Folgenden unter Bezugnahme auf die Zeichnungen näher beschrieben. Es zeigen
- Fig. 1: in perspektivischer Darstellung ein erstes Ausführungsbeispiel einer Vorrichtung nach der Erfindung,
- Fig. 2: in vergrößerter Darstellung eine Einzelheit der Vorrichtung nach Fig. 1, und
- Fig. 3: als eine vergrößerte Einzelheit ein zweites Ausführungsbeispiel der Vorrichtung nach der Erfindung mit einem alternativen zweiten Positionsmesssystem.

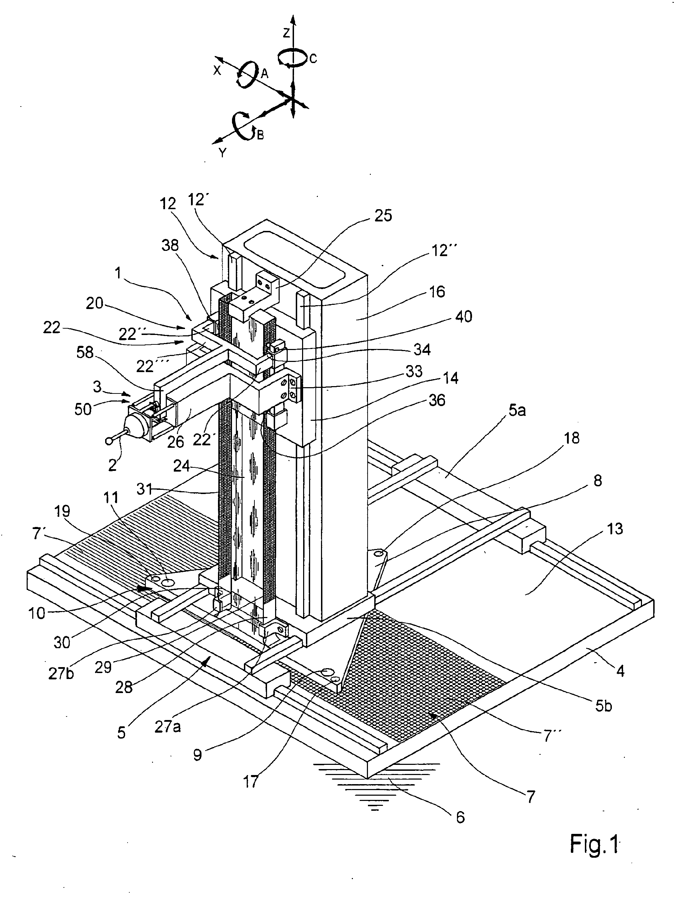

Fig. 1 zeigt eine insgesamt mit 1 bezeichnete Vorrichtung zur direkten Erfassung der räumlichen Lage eines Tastelements 2 in einem Mehrkoordinatenmessgerät, von welchem nur eine Z-Säule 16 und ein insgesamt mit 3 bezeichnetes 3D-Tastsystem dargestellt sind. Die Z-Säule 16 verkörpert die Z-Achse eines in Fig. 1 oben dargestellten rechtwinkeligen XYZ-Koordinatensystems. Diese Darstellung veranschaulicht sechs Bewegungsfreiheitsgrade, die ein starrer Körper hat, nämlich drei translatorische Freiheitsgrade, X, Y und Z und drei rotative Freiheitsgrade A, B und C. Die räumliche Lage eines Körpers wird durch die sechs Freiheitsgrade vollständig beschrieben. Der Körper, dessen räumliche Lage in dem hier beschriebenen Fall erfasst werden soll, ist, wie gesagt, das Tastelement 2, das Teil des 3D-Tastsystems 3 ist, das weiter unten näher beschrieben ist. Erfasst werden sollen alle Bewegungen des Tastelements 2 in X-, Y-und Z-Richtung einschließlich aller Bewegungskomponenten in Richtung der sechs Freiheitsgrade. Die Vorrichtung 1 hat ein Bezugssystem, das bei dem in Fig. 1 dargestellten Ausführungsbeispiel aus einem ersten Normal 4 und einem zweiten Normal 24 besteht, die der X- und Y-Achse bzw. der Z-Achse des Mehrkoordinatenmessgerätes zugeordnet sind. Die Achsen des Mehrkoordinatenmessgerätes in X- und Y-Koordinatenrichtung sind als ein insgesamt mit 5 bezeichneter Kreuzschlitten ausgeführt. Der Kreuzschlitten 5 besteht aus einem X-Schlitten 5a und einem Y-Schlitten 5b. Der X-Schlitten 5a ist auf dem ersten Normal 4 in X-Richtung verschiebbar geführt, und der Y-Schlitten 5b ist auf dem X-Schlitten 5a in Y-Richtung verschiebbar geführt, wie es in Fig. 1 schematisch dargestellt ist. Das zweite Normal 24 ist somit relativ zu dem ersten Normal 4 mittels des Kreuzschlittens 5 zweidimensional verfahrbar.

Das erste Normal 4 ist ein ebenes flächiges Normal mit einer in Fig. 1 nach oben gewandten Hauptfläche 13. Es ist in dem dargestellten Ausführungsbeispiel als eine rechteckige Platte ausgeführt, die auf einem Bett 6 eines Mehrkoordinatenmessgerätes befestigt ist. Das erste Normal 4 trägt eine zweidimensionale Linienrasterordnung 7, die ein eindimensionales Linienraster 7' und ein zweidimensionales Linienraster 7" aufweist. Das eindimensionale Linienraster 7' könnte auch durch ein zweidimensionales Linienraster ersetzt sein, wobei in diesem Fall die Linienrasteranordnung 7 insgesamt nur aus einem zweidimensionalen Linienraster bestehen würde. Dieser Fall ist der Übersichtlichkeit halber in Fig. 1 nicht dargestellt.

Die Z-Säule 16 ist auf dem Y-Schlitten 5b des Kreuzschlittens 5 befestigt und trägt zusammen mit dem Y-Schlitten 5b das zweite Normal 24 derart, dass dieses senkrecht zu der Hauptfläche 13 des ersten Normals 4 angeordnet ist, die die Linienrasteranordnung 7 trägt. Das zweite Normal 24 ist im Längsschnitt in einer Ebene, die die Y- und die Z-Achse enthält, ein L-förmiger Körper, der einen in Draufsicht dreieckigen Fuß 8 hat, welcher durch den Kreuzschlitten 5 parallel zu dem ersten Normal 4 und mit Abstand von demselben geführt ist.

Der Fuß 8 trägt ein insgesamt mit 10 bezeichnetes erstes Positionsmesssystem zur berührungsfreien Bestimmung der räumlichen Lage des zweiten Normals 24 in Bezug auf das erste Normal 4. Das erste Positionsmesssystem 10 weist einen ersten inkrementellen Lesekopf 9 und einen zweiten inkrementellen Lesekopf 11 auf zum Erfassen des zweidimensionalen Linienrasters 7" bzw. des eindimensionalen Linienrasters 7' des ersten Normals 4, die an dem Fuß 8 des zweiten Normals 24 auf einer der Hauptfläche 13 des ersten Normals 4 gegenüberliegenden Seite gegenseitig beabstandet vorgesehen sind. Weiter weist das erste Positionsmesssystem 10 drei in den Ecken eines gedachten gleichseitigen Dreiecks angeordnete Abstandssensoren 17, 18 und 19 auf, die an dem Fuß 8 des zweiten Normals 24 auf der der Hauptfäche 13 des ersten Normals 4 gegenüberliegenden Seite vorgesehen sind. Wenn der Kreuzschlitten 5 bewegt wird, bewegen sich die Abstandssensoren 17, 18 und 19 in der XY-Ebene parallel zu dem ersten Normal 4 mit geringem Abstand von diesem. Mit den drei Abstandssensoren 17, 18, 19 werden der Abstand und die Winkellage des zweiten Normals 24 in Relation zu der Hauptfläche 13 des ersten Normals 4 erfasst. Mit den beiden Leseköpfen 9 und 11 werden die Position und die Winkellage des zweiten Normals 24 in der XY-Ebene in Relation zu der auf dem ersten Normal 4 aufgebrachten Linienrasteranordnung 7 erfasst. In der Darstellung in Fig. 1 ist von den beiden Leseköpfen 9, 11 des ersten Positionsmesssystems 10 der Lesekopf 9 dem zweidimensionalen Linienraster 7" und der Kopf 11 dem eindimensionalen Linienraster 7' zugeordnet. Die Anordnung kann aber auch so getroffen sein, dass beide Leseköpfe 9, 11 dem zweidimensionalen Linienraster 7" zugeordnet sind. In diesem Fall, der in Fig. 1 nicht dargestellt ist, müsste das zweidimensionale Linienraster 7" flächenmäßig so ausgedehnt sein, dass die Leseköpfe 9, 11 in dem gesamten Verfahrbereich des Kreuzschlittens 5 über dem zweidimensionalen Linienraster 7" angeordnet bleiben. Zu diesem Zweck könnte auch einfach das eindimensionale Linienraster 7' durch ein weiteres zweidimensionales Linienraster ersetzt werden, was, wie gesagt, der Übersichtlichkeit halber auch nicht dargestellt ist.

Die Z-Säule 16 ist als ein starrer, verwindungssteifer, langgestreckter Hohlkörper ausgebildet. An der Z-Säule 16 ist ein Schlitten 14 längs einer insgesamt mit 12 bezeichneten Führung verfahrbar. Die Führung 12 des Schlittens 14 wird durch zwei quer zur Z-Achse beabstandete Längsführungen 12', 12" gebildet. Der Schlitten 14 hat zwei parallele Längsnuten, die die Längsführungen 12' bzw. 12" verschiebbar aufnehmen, und trägt das 3D-Tastsystem 3.

Zum Erfassen der räumlichen Lage des Tastelements 2 ist die räumliche Lage des Schlittens 14 zu erfassen. Dabei bedeutet die Erfassung der räumlichen Lage des Schlittens 14, dass nicht nur die Primärbewegung in der Z-Koordinatenrichtung erfasst wird, sondern auch alle übrigen durch Führungsfehler verursachten kleineren Bewegungen in Richtung der insgesamt sechs Freiheitsgrade eines starren Körpers im Raum. Dazu dient ein insgesamt mit 20 bezeichnetes zweites Positionsmesssystem. Mit diesem lässt sich die räumliche Lage eines durch ein U-Profilteil 33 mit dem Schlitten 14 fest verbundenen Tragkörpers 22 in Bezug auf das zweite Normal 24 bestimmen. Das zweite Normal 24 erstreckt sich parallel zu der Führung 12 des Schlittens 14 und hat einen polygonalen Querschnitt, im dargestellten Ausführungsbeispiel einen recheckigen Querschnitt. Das zweite Normal 24 ist parallel zu der Z-Achse und parallel zu dem Schlitten 14 jeweils in einem festen Abstand von der Z-Säule 16 und von dem Schlitten 14 angeordnet. In dem dargestellten Ausführungsbeispiel ist das zweite Normal 24 eine langgestreckte rechteckige Platte, die oben durch ein Winkelstück 25 fest mit der Z-Säule 16 verbunden ist und die unten durch zwei Winkel 27a, 27b mit dem Y-Schlitten 5b verschiebbar verbunden ist. Der Y-Schlitten 5b ist seinerseits starr mit der Z-Säule 16 verbunden. Das zweite Normal 24 besteht ebenso wie das erste Normal 4 aus einem temperaturinvarianten Material, um Temperaturauswirkungen auf die Erfassung der räumlichen Lage des Schlittens 14 und damit des Tastelements 2 möglichst auszuschließen. Das Winkelstück 25, das U-Profilteil 33 und die Winkel 27a, 27b, die hier als feste bzw. verschiebliche Verbindung angegeben sind, dienen lediglich zur Veranschaulichung und können in der Praxis aus ganz anders aufgebauten, aber äquivalenten Mitteln bestehen.

Das zweite Normal 24 trägt auf einer ersten Fläche, hier einer Seitenfläche 28, und auf einer zweiten Fläche, hier einer Seitenfläche 30, jeweils ein zweidimensionales Linienraster 29 bzw. 31. Die erste und die zweite Fläche sind also hier die beiden gegenüberliegenden, zueinander parallelen Seitenflächen außen an den Längsseiten der langgestreckten rechteckigen Platte, die das zweite Normal 24 bildet.

Das zweite Positionsmesssystem 20 hat zur Erfassung der Linienraster 29, 31 des zweiten Normals 24
- einen dritten Lesekopf 34 und vertikal beabstandet darunter einen vierten Lesekopf 36, die beide an dem Tragkörper 22 vorgesehen und dem Linienraster 29 zugeordnet sind,
- einen an dem Tragkörper 22 vorgesehenen fünften Lesekopf 38, der dem Linienraster 31 zugeordnet ist, und
- einen vierten Abstandssensor 40 zum Erfassen des Abstands zwischen dem Tragkörper 22 und der mit dem Linienraster 29 versehenen Seitenfläche 28 oder irgendeiner dazu parallelen Fläche des zweiten Normals 24.

Die Anordnung des Tragkörpers 22 an dem Schlitten 14 ist dabei so getroffen, dass weder der Tragkörper noch die Leseköpfe 34, 36, 38 oder der Abstandssensor 40 an irgendeiner Stelle mit dem zweiten Normal 24 in Berührung kommen können. Der fünfte Lesekopf 38 ist vorzugsweise so an dem Tragkörper 22 vorgesehen, dass er dem dritten Lesekopf 34 auf gleicher Höhe wie dieser in Bezug auf die Längserstreckung des zweiten Normals 24 gegenüberliegt. Der vierte Lesekopf 36 ist so vertikal beabstandet unter dem dritten Lesekopf 34 angeordnet, dass die drei Leseköpfe 34, 36, 38 in einer die Z-Achse enthaltenden Ebene eines Längsschnittes durch das zweite Normal 24 in den Ecken eines rechtwinkeligen Dreiecks liegen. In Bezug darauf ist der vierte Abstandssensor 40 in einer definierten Position an dem Tragkörper 22 vorgesehen, nämlich möglichst nahe bei dem dritten Lesekopf 34. Der Tragkörper 22 ist im Querschnitt (d.h. quer zu der Z-Achse) U-förmig und trägt an seinen beiden U-Schenkeln 22', 22" den dritten Lesekopf 34 bzw. den fünften Lesekopf 38. Der U-Schenkel 22' ist dabei vertikal so nach unten verlängert, dass der vierte Lesekopf 36 von dem dritten Lesekopf 34 für eine genaue Messung ausreichend beabstandet ist. Die drei Leseköpfe 34, 36, 38 sind ebenso wie die beiden Leseköpfe 9 und 11 inkrementelle optische Leseköpfe. Der vierte Abstandssensor 40 ist vorzugsweise ein kapazitiver Sensor, könnte aber auch ein induktiver oder optischer Sensor sein. Bei den zweidimensionalen Linienrastern 29, 31 handelt es sich jeweils um eine Kreuzgitterstruktur. Das zweite Normal 24 ist vorzugsweise ein Körper aus Glas (Zerodur®), könnte aber auch ein Körper aus Invar®-Stahl sein, der auch temepraturinvariant ist, sich aber nicht so gut wie Glas zum Aufbringen von Kreuzgitterstrukturen eignet.

In dem in Fig. 1 dargestellten Ausführungsbeispiel ist der Tragkörper 22 auf der Vorderseite des Schlittens 14 befestigt und besteht aus temperaturinvariantem Material. Stattdessen könnte der Tragkörper 22 auch ein integrierender Bestandteil des Schlittens 14 sein.

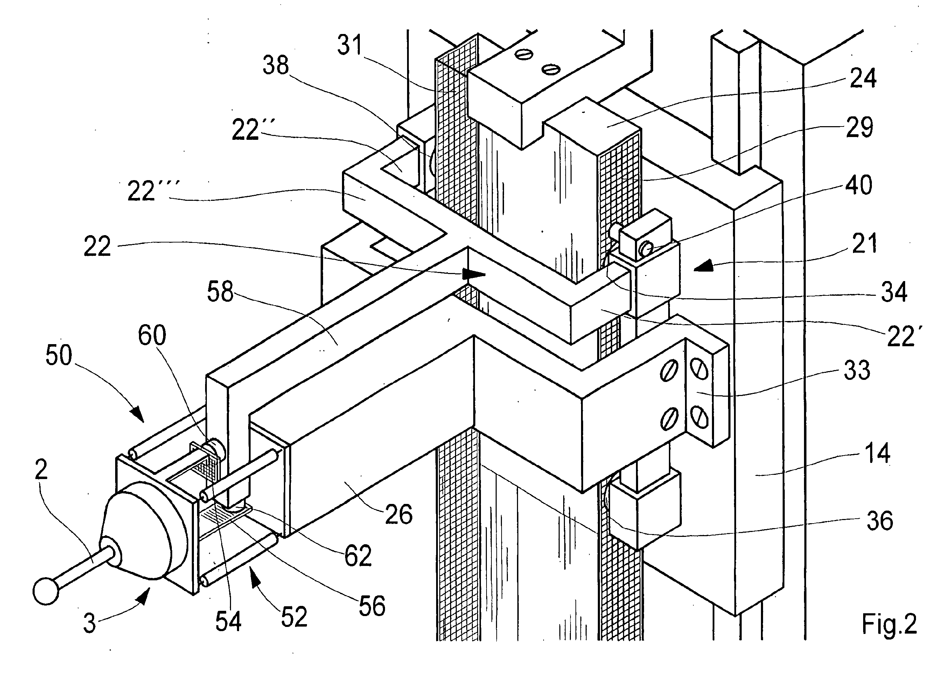

Das 3D-Tastsystem 3 weist ein insgesamt mit 50 bezeichnetes drittes Positionsmesssystem auf, das in der vergrößerten Darstellung in Fig. 2 besser als in Fig. 1 erkennbar ist. Das U-Profilteil 33 ist zu dem Tastsystem 3 hin zu einem Ausleger 26 verlängert. Das dritte Positionsmesssystem 50 ist an dem Ausleger 26 mittels eines insgesamt mit 52 bezeichneten Parallelogrammgestänges beweglich befestigt. Das Tastelement 2 trägt auf seiner dem zweiten Normal 24 benachbarten Seite ein zweidimensionales Linienraster 54 und ein eindimensionales Linienraster 56. Ein U-Steg 22"' des Tragkörpers 22 ist nach vorn zu dem Tastsystem 3 hin durch ein auslegerartiges Halteelement 58 verlängert, an dessen freiem Ende zwei inkrementelle optische Leseköpfe 60, 62 angeordnet sind, die dem zweitdimensionalen Linienraster 54 bzw. dem eindimensionalen Linienraster 56 zugeordnet sind. Die so in das Tastsystem 3 integrierten Leseköpfe 60, 62 sind über das Haltelement 58 direkt mit dem Tragkörper 22 verbunden. Damit lässt sich ein direkter Bezug zwischen der Tastelementposition 2 und dem Tragkörper 22 herstellen. Insgesamt ist dadurch jederzeit die Tastelementposition in dem durch das erste Normal 4 definierten Koordinatensystem genau bestimmbar. Das U-Profilteil 33 und somit der Ausleger 26 sowie das Haltelement 58 bestehen ebenfalls aus temperaturinvariantem Material.

Die in den Fig. 1 und 2 dargestellte Vorrichtung 1 arbeitet folgendermaßen:

Mittels des Kreuzschlittens 5 wird das zweite Normal 24 mit seinem Fuß 8 über das erste Normal 4 hinwegbewegt, ohne letzteres zu berühren. Die Leseköpfe 9 und 11 erfassen ihre Position in X- und Y-Richtung relativ zu den gegenüberliegenden Linienrastern 7" bzw. 7' des ersten Normals 4. Die Abstandssensoren 17, 18, 19 erfassen ihren Abstand in Z-Richtung zu der Hauptfläche 13 des ersten Normals 4. Durch diesen Aufbau ist es möglich, die Position und die räumliche Lage des zweiten Normals 24 innerhalb des durch das erste Normal 4 definierten Koordinatensystems zu bestimmen.

In senkrechter Richtung wird durch den Schlitten 14 der Z-Achse der Tragkörper 22 an dem zweiten Normal 24 entlang geführt, ohne letzteres zu berühren. Die Leseköpfe 34 und 38 erfassen ihre Position in Z- und Y-Richtung relativ zu den jeweils gegenüberliegend angebrachten Linienrastern 29 bzw. 31 des zweiten Normals 24. Der vierte Lesekopf 36 erfasst nur seine Position in Y-Richtung relativ zu dem auf der Seitenfläche 38 des zweiten Normals 24 aufgebrachten Linienraster 29. Der vierte Abstandssensor 40 erfasst einen Abstand in X-Richtung zu der Seitenfläche 28 auf der rechten Seite des zweiten Normals 24. Durch die Anordnung der drei Leseköpfe 34, 36, 38 und des vierten Abstandssensors 40 in definierten Positionen in Bezug auf die Leseköpfe an dem Tragkörper 22 können die Position und die räumliche Lage des Tragkörpers 22 und des mit diesem verbundenen Schlittens 14 in Relation zu dem zweiten Normal 24 bestimmt werden, d.h. die insgesamt sechs translatorischen und rotativen Komponenten X, Y und Z bzw. A, B und C der Bewegung des Tragkörpers 22 und somit des Schlittens 14.

Da die Leseköpfe 60, 62 des 3D-Tastsystems 3 durch das Halteelement 58 mit dem Tragkörper 22 verbunden sind, lässt sich über die Linienraster 54, 56 ein direkter Bezug zwischen der Tastelementposition und dem Tragkörper 22 herstellen. Insgesamt ist dadurch jederzeit die Tastelementposition in dem durch das erste Normal 4 definierten Koordinatensystem genau bestimmbar.

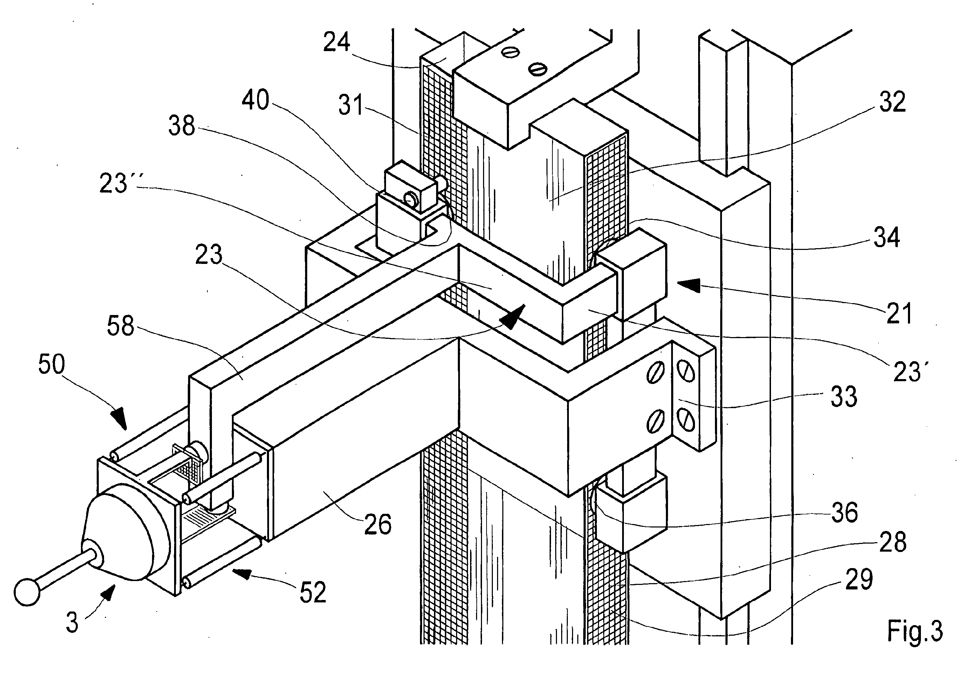

Fig. 3 zeigt in vergrößerter Darstellung als eine Einzelheit ein zweites Ausführungsbeispiel der insgesamt mit 1 bezeichneten Vorrichtung mit einem alternativen zweiten Positionsmesssystem 21. Dabei sind die erste und die zweite Fläche, auf denen das zweite Normal 24 die zweidimensionalen Linienraster 29 bzw. 31 trägt, die Seitenfläche 28 bzw. eine gegen diese abgewinkelte Stirnfläche 32. Der fünfte Lesekopf 38 ist dem Linienraster 31 der dritten Fläche 32 zugeordnet. Benachbart zu dem fünften Lesekopf 38 ist der vierte Abstandssensor 40 an einem Tragkörper 23 vorgesehen, der ein Winkelprofilteil ist, das an seinen beiden Winkelschenkeln 23', 23" den dritten Lesekopf 34 und darunter den vierten Lesekopf 36 bzw. den fünften Lesekopf 38 trägt. Abgesehen von dem vorstehend beschriebenen unterschiedlichen Aufbau des zweiten Positionsmesssystems 21 gegenüber dem des zweiten Positionsmesssystems 20 hat die Vorrichtung denselben Aufbau und dieselbe Arbeitsweise wie die Vorrichtung 1 nach den Fig. 1 und 2 und braucht deshalb nicht erneut beschrieben zu werden.

### Bezugszeichenliste

- 1: Vorrichtung
- 2: Tastelement
- 3: Tastsystem
- 4: erstes Normal
- 5: Kreuzschlitten
- 5a: X-Schlitten
- 5b: Y-Schlitten
- 6: Bett
- 7: Linienrasteranordnung
- 7': eindimensionales Linienraster
- 7": zweidimensionales Linienraster
- 8: Fuß
- 9: erster Lesekopf
- 10: erstes Positionsmesssystem
- 11: zweiter Lesekopf
- 12: Führung
- 12', 12": Längsführung
- 13: Hauptfläche
- 14: Schlitten
- 16: Z-Säule
- 17: Abstandssensor
- 18: Abstandssensor
- 19: Abstandssensor
- 20: zweites Positionsmesssystem
- 21: zweites Positionsmesssystem
- 22: Tragkörper
- 22', 22": U-Schenkel
- 22"': U-Steg
- 23: Tragkörper
- 23', 23": Winkelschenkel
- 24: zweites Normal
- 25: Winkelstück
- 26: Ausleger
- 27a, 27b: Winkel
- 28: Seitenfläche
- 29: zweidimensionales Linienraster
- 30: Seitenfläche
- 31: zweidimensionales Linienraster
- 32: Stirnfläche
- 33: U-Profilteil
- 34: dritter Lesekopf
- 36: vierter Lesekopf
- 38: fünfter Lesekopf
- 40: vierter Abstandssensor
- 50: drittes Positionsmesssystem
- 52: Parallelogrammgestänge
- 54: zweidimensionales Linienraster
- 56: eindimensionales Linienraster
- 58: Halteelement
- 60: Lesekopf
- 62: Lesekopf

## Patentansprüche

1. Vorrichtung zur direkten Erfassung der räumlichen Lage eines Tastelements in einem Mehrkoordinatenmessgerät, mit einem Bezugssystem aus wenigsten einem ersten und einem zweiten Normal, die den Koordinatenachsen des Messgeräts zugeordnet sind,
wobei das erste Normal ein ebenes flächiges Normal mit einer Hauptfläche ist, die eine Linienrasteranordnung trägt, welche wenigstens ein zweidimensionales Linienraster aufweist, und
wobei das zweite Normal ein relativ zu dem ersten Normal berührungsfrei und zweidimensional verfahrbares langgestrecktes Normal ist, das senkrecht zu der Hauptfläche angeordnet ist,
**dadurch gekennzeichnet, dass** ein erstes Positionsmesssystem (10) zur Bestimmung der räumlichen Lage des zweiten Normals (24) in Bezug auf das erste Normal (4) vorgesehen ist.

2. Vorrichtung nach Anspruch 1, **dadurch gekennzeichnet, dass** die Linienrasteranordnung (7) des ersten Normals (4) das zweidimensionale Linienraster (7") und ein eindimensionales Linienraster (7') aufweist.

3. Vorrichtung nach Anspruch 1 oder 2, **dadurch gekennzeichnet, dass** das erste Positionsmesssystem (10) wenigstens einen ersten Lesekopf (9) und mit Abstand davon einen zweiten Lesekopf (11) zum Erfassen der Linienrasteranordnung (7) des ersten Normals (4) aufweist, wobei die Leseköpfe (9, 11) an dem zweiten Normal (24) gegenüber der Hauptfläche (13) des ersten Normals (4) vorgesehen sind.

4. Vorrichtung nach Anspruch 3, **dadurch gekennzeichnet, dass** von den beiden Leseköpfen (9, 11) des ersten Positionsmesssystems (10) entweder beide Leseköpfe (9, 11) dem zweidimensionalen Linienraster (7") des ersten Normals (4) oder ein Lesekopf dem eindimensionalen Linienraster (7') und der andere Lesekopf dem zweidimensionalen Linienraster (7") des ersten Normals (4) zugeordnet sind.

5. Vorrichtung nach einem der Ansprüche 1 bis 4, **dadurch gekennzeichnet, dass** das erste Positionsmesssystem (10) drei in den Ecken eines gedachten gleichseitigen Dreiecks angeordnete Abstandssensoren (17, 18, 19) aufweist, die an dem zweiten Normal (24) auf einer dem ersten Normal (4) gegenüberliegenden Seite vorgesehen sind.

6. Vorrichtung nach einem der Ansprüche 1 bis 5, **dadurch gekennzeichnet, dass** das zweite Normal (24) an einer Säule (16) vorgesehen ist, an der ein Schlitten (14) längs einer Führung (12) verfahrbar ist, und sich parallel zu der Führung (12) des Schlittens (14) erstreckt,
dass das zweite Normal (24) ein prismatischer Körper mit vorzugsweise polygonalem Querschnitt ist und auf einer ersten und einer zweiten Fläche (28, 30; 28, 32) zweidimensionale Linienraster (29, 31) trägt, und
dass ein zweites Positionsmesssystem (20) zur Bestimmung der räumlichen Lage eines mit dem Schlitten (14) fest verbindbaren oder in den Schlitten (14) integrierten Tragkörpers (22; 23) in Bezug auf das zweite Normal (24) vorgesehen ist.

7. Vorrichtung nach Anspruch 6, **dadurch gekennzeichnet, dass** das zweite Positionsmesssystem (20) aufweist
- einen dritten Lesekopf (34) und einen beabstandeten vierten Lesekopf (36), die an dem Tragkörper (22; 23) vorgesehen und einem ersten (29) der zweidimensionalen Linienraster (29, 31) des zweiten Normals (24) zugeordnet sind,
- einen an dem Tragkörper (22; 23) angebrachten fünften Lesekopf (38), der einem zweiten (31) der zweidimensionalen Linienraster (29, 31) des zweiten Normals (24) zugeordnet ist,
- einen vierten Abstandssensor (40) zum Erfassen des Abstands zwischen dem Tragkörper (22; 23) und einer (28) der mit einem zweidimensionalen Linienraster (29, 31) versehenen Flächen (28, 30; 28, 32) des zweiten Normals (24) oder einer dazu parallelen Fläche, und
dass die Anordnung des Tragkörpers (22; 23) an dem Schlitten (14) so getroffen ist, dass der Tragkörper (22; 23) bei dem Erfassungsvorgang nicht mit dem zweiten Normal (24) in Berührung kommen kann.

8. Vorrichtung nach Anspruch 7, **dadurch gekennzeichnet, dass** die erste und die zweite Fläche (28, 30) zwei einander gegenüberliegende, zueinander parallele Seitenflächen (28, 30) des zweiten Normals (24) sind.

9. Vorrichtung nach Anspruch 7, **dadurch gekennzeichnet, dass** die erste und die zweite Fläche (28, 32) eine Seitenfläche (28) und eine gegen diese abgewinkelte Stirnfläche (32) des zweiten Normals (24) sind.

10. Vorrichtung nach einem der Ansprüche 7 bis 9, **dadurch gekennzeichnet, dass** der vierte Abstandssensor (40) an dem Tragkörper (22; 23) in einer definierten Position in Bezug auf dessen Leseköpfe (34, 36, 38) vorgesehen ist.

11. Vorrichtung nach einem der Ansprüche 7 bis 10, **dadurch gekennzeichnet, dass** die Normale (4, 24) aus einem temperaturinvarianten Material bestehen.

12. Vorrichtung nach einem der Ansprüche 7 bis 11, **dadurch gekennzeichnet, dass** der Tragkörper (22; 23) aus einem temperaturinvarianten Material besteht.

13. Vorrichtung nach einem der Ansprüche 7 bis 12, **dadurch gekennzeichnet, dass** das zweite Normal (24) zur Anordnung zwischen zwei beabstandeten Längsführungen (12', 12"), welche die Führung (12) des Schlittens (14) bilden, ausgestaltet ist.

14. Vorrichtung nach einem der Ansprüche 7 bis 13, **dadurch gekennzeichnet, dass** das zweite Normal (24) eine langgestreckte rechteckige Platte ist.

15. Vorrichtung nach einem der Ansprüche 7 bis 14, **dadurch gekennzeichnet, dass** der Tragkörper (22) im Querschnitt U-förmig ist und an seinen beiden U-Schenkeln (22', 22") den dritten und vierten bzw. den fünften Lesekopf (34, 36 bzw. 38) trägt.

16. Vorrichtung nach einem der Ansprüche 7 bis 14, **dadurch gekennzeichnet, dass** der Tragkörper (23) ein Winkelprofilteil ist und an seinen beiden Winkelschenkeln (23', 23") den dritten und vierten bzw. den fünften Lesekopf (34, 36 bzw. 38) trägt.

17. Vorrichtung nach einem der Ansprüche 7 bis 16, **dadurch gekennzeichnet, dass** der fünfte Lesekopf (38) an dem Tragkörper (22; 23) so vorgesehen ist, dass er dem dritten oder dem vierten Lesekopf (34, 36) auf gleicher Höhe wie dieser in Bezug auf eine Längserstreckung des zweiten Normals (24) gegenüberliegt.

18. Vorrichtung nach einem der Ansprüche 6 bis 17, **dadurch gekennzeichnet, dass** der Schlitten (14) ein mit dem Tastelement (2) und mit einem dritten Positionsmesssystem (50) versehenes 3D-Tastsystem (3) trägt.

19. Vorrichtung nach Anspruch 18, **dadurch gekennzeichnet, dass** das Tastsystem (3) weitere Leseköpfe (60, 62) aufweist, die durch ein austegerartiges Halteelement (58) direkt mit dem Tragkörper (22; 23) verbunden sind.

20. Vorrichtung nach Anspruch 19, **dadurch gekennzeichnet, dass** das Halteelement (58) aus temperaturinvariantem Material besteht.

## Claims

1. A device for direct detection of the spatial position of a probe element in a multi-coordinate measuring apparatus, with a reference system comprised of at least one first and one second standard that are associated with coordinate axes of the measuring apparatus,
wherein the first standard is a planar standard having a main surface carrying a line grating array which includes at least one two-dimensional line grating, and
wherein the second standard is an elongate standard non-contacting relative to the first standard, is movable in two dimensions and is disposed at right angles to the main surface,
**characterized in that** provision is made for a first position measuring system (10) for determining the spatial position of the second standard (24) with respect to the first standard (4).

2. The device as claimed in claim 1, **characterized in that** the line grating array (7) of the first standard (4) includes the two-dimensional line grating (7") and a one-dimensional line grating (7').

3. The device as claimed in claim 1 or 2, **characterized in that** the first position measuring system (10) includes at least one first reading head (9) and spaced therefrom a second reading head (11) for detecting the line grating array (7) of the first standard (4), said reading heads (9, 11) being provided on the second standard (24) opposite the main surface (13) of the first standard (4).

4. The device as claimed in claim 3, **characterized in that** either both reading heads (9, 11) of the two reading heads (9, 11) of the first position measuring system (10) are associated with the two-dimensional line grating (7") of the first standard (4), or one reading head is associated with the one-dimensional line grating (7') while the other reading head is associated with the two-dimensional line grating (7") of the first standard (4).

5. The device as claimed in any one of the claims 1 to 4, **characterized in that** the first position measuring system (10) includes three distance sensors (17, 18, 19) arranged in the corners of an imaginary equilateral triangle on the second standard (24) on a side opposite the first standard (4).

6. The device as claimed in any one of the claims 1 to 5, **characterized in that** the second standard (24) is provided on a column (16) on which a carriage (14) is movable along a guide (12), and extends parallel to the guide (12) of the carriage (14),
the second standard (24) is a prismatic body of preferably polygonal cross-section carrying two-dimensional line gratings (29, 31) on a first and a second surface (28, 30; 28, 32), and
provision is made for a second position measuring system (20) for determining the spatial position of a support member (22; 23) fixedly connectible with or integrated into the carriage (14) with respect to the second standard (24).

7. The device as claimed in claim 6, **characterized in that** the second position measuring system (20) comprises:
- a third reading head (34) and, spaced therefrom, a fourth reading head (36), which are provided on the support member (22; 23) and associated with a first one (29) of the two-dimensional line gratings (29, 31) of the second standard (24),
- a fifth reading head (38) provided on the support member (22; 23) and associated with a second one (31) of the two-dimensional line gratings (29, 31) of the second standard (24),
- a fourth distance sensor (40) for detecting the distance between the support member (22; 23) and one (28) of the surfaces (28, 30; 28, 32) of the second standard (24) provided with a two-dimensional line grating (29, 31) or any surface parallel thereto, and
that the support member (22; 23) is arranged on the carriage (14) in such manner that the support member (22; 23) is prevented from contacting the second standard (24) during the detection operation.

8. The device as claimed in claim 7, **characterized in that** the first and the second surface (28, 30) are two opposed parallel lateral surfaces (28, 30) of the second standard (24).

9. The device as claimed in claim 7, **characterized in that** the first and the second surface (28, 32) of the second standard (24) are, respectively, one lateral surface (28) and one end surface (32) arranged at an angle thereto.

10. The device as claimed in any one of the claims 7 to 9, **characterized in that** the fourth distance sensor (40) is provided on the support member (22; 23) in a defined position with respect to its reading heads (34, 36, 38).

11. The device as claimed in any one of the claims 7 to 10, **characterized in that** the standards (4, 24) are made of a temperature-invariant material.

12. The device as claimed in any one of the claims 7 to 11, **characterized in that** the support member (22; 23) is made of a temperature-invariant material.

13. The device as claimed in any one of the claims 7 to 12, **characterized in that** the second standard (24) is configured for arrangement between two spaced longitudinal guideways (12', 12") forming the guide (12) for the carriage (14).

14. The device as claimed in any one of the claims 7 to 13, **characterized in that** the second standard (24) is an elongate rectangular plate.

15. The device as claimed in any one of the claims 7 to 14, **characterized in that** the support member (22) is U-shaped in cross-section and carries on its two U legs (22', 22") the third and fourth and, respectively, fifth reading head (34, 36 and 38, respectively).

16. The device as claimed in any one of the claims 7 to 14, **characterized in that** the support member (23) is an angle bracket carrying on its two angle arms (23', 23") the third and fourth and, respectively, fifth reading head (34, 36 and 38, respectively).

17. The device as claimed in any one of the claims 7 to 16, **characterized in that** the fifth reading head (38) is provided on the support member (22; 23) in such manner that it lies opposite and level with the third or the fourth reading head (34, 36) with respect to a longitudinal dimension of the second standard (24).

18. The device as claimed in any one of the claims 6 to 17, **characterized in that** the carriage (14) carries a three-dimensional probe assembly (3) provided with the probe element (2) and with a third position measuring system (50).

19. The device as claimed in claim 18, **characterized in that** the probe assembly (3) includes further reading heads (60, 62) connected to the support member (22; 23) directly by way of a cantilever-type holding element (58).

20. The device as claimed in claim 19, **characterized in that** the holding element (58) is made of a temperature-invariant material.

## Revendications

1. Dispositif pour la détection directe de la position dans l'espace d'un élément palpeur dans un dispositif de mesure à plusieurs coordonnées, comportant un système de référence formé par au moins un premier étalon et un deuxième étalon, lesquels sont associés aux axes de coordonnées du dispositif de mesure, le premier étalon étant un étalon surfacique plan avec une surface principale, qui porte un système de réseaux réguliers, qui comporte au moins un réseau régulier bidimensionnel, et le deuxième étalon étant un étalon allongé, sans contact par rapport au premier étalon, lequel peut être déplacé sur le plan bidimensionnel et lequel est disposé perpendiculairement à la surface principale,
**caractérisé en ce qu'**il est prévu un premier système de mesure de position (10) pour déterminer la position dans l'espace du deuxième étalon (24) par rapport au premier étalon (4).

2. Dispositif selon la revendication 1, **caractérisé en ce que** le système de réseaux réguliers (7) du premier étalon (4) comporte le réseau régulier bidimensionnel (7'') et le réseau régulier unidimensionnel (7').

3. Dispositif selon la revendication 1 ou 2, **caractérisé en ce que** le premier système de mesure de position (10) comporte au moins une première tête de lecture (9) et, à distance de celle-ci, une deuxième tête de lecture (11) pour détecter le système de réseaux réguliers (7) du premier étalon (4), les têtes de lecture (9, 11) étant prévues sur le deuxième étalon (24) en face de la surface principale (13) du premier étalon (4).

4. Dispositif selon la revendication 3, **caractérisé en ce que** parmi les deux têtes de lecture (9, 11) du premier système de mesure de position (10), soit les deux têtes de lecture (9, 11) sont associées au réseau régulier bidimensionnel (7") du premier étalon (4) ou une tête de lecture est associée au réseau régulier unidimensionnel (7') et l'autre tête de lecture est associée au réseau régulier bidimensionnel (7") du premier étalon (4).

5. Dispositif selon l'une quelconque des revendications 1 à 4, **caractérisé en ce que** le premier système de mesure de position (10) comporte trois capteurs de distance (17, 18, 19), qui sont disposés dans les angles d'un triangle équilatéral imaginaire et qui sont prévus au niveau du deuxième étalon (24) sur un côté opposé au premier étalon (4).

6. Dispositif selon l'une quelconque des revendications 1 à 5, **caractérisé en ce que** le deuxième étalon (24) est prévu sur une colonne (16), sur laquelle un chariot (14) peut se déplacer le long d'un guidage (12) et laquelle est disposée parallèlement au guidage (12) du chariot (14),
**en ce que** le deuxième étalon (24) est un corps prismatique avec une section, de préférence, polygonale et porte des réseaux réguliers bidimensionnels (29, 31) sur une première et une deuxième surface (28, 30 ; 28, 32),
**en ce que**, par rapport au deuxième étalon (24), il est prévu un deuxième système de mesure de position (20) pour déterminer la position dans l'espace d'un corps de support (22, 23), qui est apte à être assemblé de manière fixe au chariot (14) ou est intégré dans le chariot (14).

7. Dispositif selon la revendication 6, **caractérisé en ce que** le deuxième système de mesure de position (20) comporte :
- une troisième tête de lecture (34) et, à distance de celle-ci, une quatrième tête de lecture (36), lesquelles sont prévues sur le corps de support (22 ; 23) et sont associées à un premier (29) des réseaux réguliers bidimensionnels (29, 31) du deuxième étalon (24),
- une cinquième tête de lecture (38), qui est montée sur le corps de support (22 ; 23) et qui est associée à un deuxième (31) des réseaux réguliers bidimensionnels (29, 31) du deuxième étalon (24),
- un quatrième capteur de distance (40) destiné à détecter la distance entre le corps de support (22 ; 23) et l'une (28) des surfaces (28, 30 ; 28, 32), munie d'un réseau régulier bidimensionnel (29, 31), du deuxième étalon (24) ou une surface parallèle à celles-ci, et
**en ce que** l'agencement du corps de support (22 ; 23) sur le chariot (14) est choisi de telle sorte que le corps de support (22 ; 23) ne peut entrer en contact avec le deuxième étalon (24) lors du processus de détection.

8. Dispositif selon la revendication 7, **caractérisé en ce que** la première et la deuxième surface (28, 30) sont deux surfaces latérales (28, 30) du deuxième étalon (24), qui sont situées face à face et sont parallèles entre elles.

9. Dispositif selon la revendication 7, **caractérisé en ce que** la première et la deuxième surface (28, 32) sont une surface latérale (28) et une surface frontale (32), coudée par rapport à celle-ci, du deuxième étalon (24).

10. Dispositif selon l'une quelconque des revendications 7 à 9, **caractérisé en ce que** le quatrième capteur de distance (40) est prévu sur le corps de support (22 ; 23) dans une position définie par rapport aux têtes de lecture (34, 36, 38) de celui-ci.

11. Dispositif selon l'une quelconque des revendications 7 à 10, **caractérisé en ce que** les étalons (4, 24) sont réalisés dans un matériau invariable à la température.

12. Dispositif selon l'une quelconque des revendications 7 à 11, **caractérisé en ce que** le corps de support (22 ; 23) est réalisé dans un matériau invariable à la température.

13. Dispositif selon l'une quelconque des revendications 7 à 12, **caractérisé en ce que** le deuxième étalon (24) est conçu pour être disposé entre deux guidages longitudinaux (12', 12"), écartés l'un de l'autre, lesquels forment le guidage (12) du chariot (14).

14. Dispositif selon l'une quelconque des revendications 7 à 13, **caractérisé en ce que** le deuxième étalon (24) est un plateau rectangulaire allongé.

15. Dispositif selon l'une quelconque des revendications 7 à 14, **caractérisé en ce que** le corps de support (22) a une section en forme de U et porte sur ses deux branches du U (22', 22") la troisième et la quatrième et respectivement la cinquième tête de lecture (34, 36 et respectivement 38).

16. Dispositif selon l'une quelconque des revendications 7 à 14, **caractérisé en ce que** le corps de support (23) est une pièce profilée en angle et porte sur ses deux branches (23', 23") la troisième et la quatrième et respectivement la cinquième tête de lecture (34, 36 et respectivement 38).

17. Dispositif selon l'une quelconque des revendications 7 à 16, **caractérisé en ce que** la cinquième tête de lecture (38) est prévue sur le corps de support (22 ; 23), de telle sorte qu'elle est située en face de la troisième ou de la quatrième tête de lecture (34, 36) à la même hauteur que celle-ci par rapport à une dimension longitudinale du deuxième étalon (24).

18. Dispositif selon l'une quelconque des revendications 7 à 17, **caractérisé en ce que** le chariot (14) porte un système de palpeur tridimensionnel (3), muni de l'élément palpeur (2) et d'un troisième système de mesure de position (50).

19. Dispositif selon la revendication 18, **caractérisé en ce que** le système de palpeur (3) comporte d'autres têtes de lecture (60, 62), qui sont reliées directement au corps de support (22 ; 23) par un élément de fixation (58) en porte-à-faux.

20. Dispositif selon la revendication 19, **caractérisé en ce que** l'élément de fixation (58) est réalisé dans un matériau invariable à la température.
